# EUROPÄISCHE PATENTSCHRIFT

(11) **EP 3 328 596 B1**
(45) Veröffentlichungstag und Bekanntmachung des Hinweises auf die Patenterteilung: **05.07.2023**
(21) Anmeldenummer: 16744304.3
(22) Anmeldetag: 14.07.2016
(51) Int. Cl.: B25J 9/16, B25J 5/00

(54) **VERFAHREN ZUM STEUERN EINES MOBILEN REDUNDANTEN ROBOTERS**
METHOD FOR CONTROLLING A MOBILE REDUNDANT ROBOT
PROCÉDÉ DE COMMANDE D'UN ROBOT REDONDANT MOBILE

(30) Priorität: 28.07.2015 DE 102015009815
(43) Veröffentlichungstag der Anmeldung: 06.06.2018
(73) Patentinhaber: KUKA Deutschland GmbH, 86165 Augsburg (DE)
(72) Erfinder: SCHARMA, Shashank, 86153 Augsburg (DE); ZIMMERMANN, Uwe, 86152 Augsburg (DE); APOSTOLIDIS, Spyridon, 86153 Augsburg (DE)
(74) Vertreter: Schlotter, Alexander Carolus Paul
(86) Internationale Anmeldenummer: PCT/EP2016/001221
(87) Internationale Veröffentlichungsnummer: WO 2017/016648

(56) Entgegenhaltungen:
- DE-A1-102010 046 327
- US-A- 5 430 643
- US-A- 5 550 953
- US-A- 5 737 500
- SOUERES P ET AL: "A PATH FOLLOWING CONTROLLER FOR WHEELED ROBOTS WHICH ALLOWS TO AVOID OBSTACLES DURING TRANSITION PHASE", PROCEEDINGS OF THE 1998 IEEE INTERNATIONAL CONFERENCE ON ROBOTICS AND AUTOMATION. ICRA '98. LEUVEN, BE, MAY 16 - 20, 1998; [PROCEEDINGS OF THE IEEE INTERNATIONAL CONFERENCE ON ROBOTICS AND AUTOMATION], NEW YORK, NY : IEEE, US, Bd. CONF. 15, 16. Mai 1998 (1998-05-16), Seiten 1269-1274, XP000790583, ISBN: 978-0-7803-4301-6

## Beschreibung

Die vorliegende Erfindung betrifft ein Verfahren zum Anfahren wenigstens einer vorgegebenen Position, insbesondere zum Abfahren einer vorgegebenen Bahn, einer roboterfesten ersten Referenz eines mobilen redundanten Roboters, sowie einen mobilen redundanten Roboter mit einer Steuerung und ein Computerprogrammprodukt zur Durchführung des Verfahrens.

Aus der DE 10 2012 208 094 A1 ist ein mobiler redundanter Roboter mit einem omnidirektionalen Fahrwerk und einem sechsachsigen Roboterarm bekannt, aus der US 5,737,500 ein mobiler redundanter Roboter mit einer schienengeführten Plattform und einem siebenachsigen Roboterarm, aus der DE 10 2010 046 327 A1 eine Überwachung eines Roboters mit einer mobilen Basis.

Zur Steuerung solcher mobiler redundanter Roboter muss deren Redundanz aufgelöst werden.

Aufgabe der vorliegenden Erfindung ist es, den Betrieb mobiler redundanter Roboter zu verbessern.

Diese Aufgabe wird durch ein Verfahren mit den Merkmalen des Anspruchs 1 gelöst. Ansprüche 7, 10 stellen einen mobilen redundanten Roboter mit einer Steuerung und ein Computerprogrammprodukt zur Durchführung eines hier beschriebenen Verfahren unter Schutz. Die Unteransprüche betreffen vorteilhafte Weiterbildungen.

Nach einem Aspekt der vorliegenden Erfindung weist ein mobiler redundanter Roboter eine mobile Basis bzw. Plattform und einen darauf angeordneten mehrachsigen Roboterarm auf.

Die mobile Basis weist in einer Ausführung gegenüber der Umgebung bzw. einer Aufstandsfläche wenigstens einen, insbesondere wenigstens oder genau zwei, aktuierbare, insbesondere aktuierte, translatorische Freiheitsgrade, insbesondere in bzw. parallel zu der Aufstandsfläche, und/oder wenigstens oder genau einen aktuierbaren, insbesondere aktuierten, rotatorischen bzw. Drehfreiheitsgrad, insbesondere um eine vertikale bzw. Hochachse, auf.

In einer Ausführung weist die mobile Basis ein omnidirektionales Fahrwerk, insbesondere ein oder mehrere omnidirektionale Räder, insbesondere ein oder mehrere Mecanum-Räder, und/oder eine oder mehrere Raupenketten und/oder ein oder mehrere Räder auf, die um eine zu ihrer Rollachse senkrechte Achse drehbar sind.

Der Roboterarm weist in einer Ausführung wenigstens eine aktuierbare, insbesondere aktuierte, Drehachse auf, die senkrecht zu einer bzw. der Aufstands- bzw. Bewegungs- bzw. Grundfläche der mobilen Basis ist, d.h. mit dieser einen Winkel einschließt, der wenigstens 75°, insbesondere im Wesentlichen 90° beträgt. Diese Drehachse kann insbesondere eine erste bzw. basisnächste Drehachse sein.

Zusätzlich oder alternativ weist der Roboterarm in einer Ausführung eine oder mehrere aktuierbare, insbesondere aktuierte, Drehachsen auf, die parallel zu einer bzw. der Aufstands- bzw. Bewegungs- bzw. Grundfläche der mobilen Basis sind, d.h. mit dieser einen Winkel einschließen, der höchstens 15°, insbesondere im Wesentlichen 0° beträgt. Diese Drehachse bzw. eine dieser Drehachsen kann insbesondere eine zweite bzw. basiszweitnächste Drehachse sein.

In einer Ausführung weist der Roboterarm eine oder mehrere weitere aktuierbare, insbesondere aktuierte, Drehachsen und/oder eine oder mehrere weitere aktuierbare, insbesondere aktuierte, Linearachsen auf.

In einer Ausführung weist der Roboterarm wenigstens und/oder höchstens fünf, insbesondere sechs, insbesondere sieben, aktuierbare, insbesondere aktuierte, Achsen auf. Bei einem höchstens fünfachsigen Roboterarm kann vorteilhaft ein Freiheitsgrad der mobilen Basis zum Anfahren vorgegebener Positionen genutzt werden, bei einem wenigstens sechsachsigen Roboterarm können vorteilhaft alle Freiheitsgrade der mobilen Basis zum Ausweichen genutzt werden, bei einem wenigstens siebenachsigen Roboterarm können vorteilhaft Freiheitsgrade des Roboterarms zur Optimierung genutzt werden.

Nach einem Aspekt der vorliegenden Erfindung weist ein Verfahren zum Anfahren wenigstens einer vorgegebenen Position, insbesondere zum sukzessiven Anfahren mehrerer vorgegebener Positionen bzw. zum Abfahren einer vorgegebenen Bahn bzw. Trajektorie, (mit bzw. durch) eine(r) roboterfeste(n) erste(n) Referenz eines bzw. des mobilen redundanten Roboters die Schritte auf:
- Ermitteln einer, insbesondere variierenden, Position eines Hindernisses, insbesondere während einer Bewegung des Roboters, insbesondere seiner mobilen Basis;
- Bewegen der mobilen Basis in Abhängigkeit von der ermittelten Position des Hindernisses; und dabei
- Bewegen des Roboterarms in Abhängigkeit von der vorgegebenen Position, insbesondere der vorgegebenen Bahn, und der Bewegung der mobilen Basis.

Eine Steuerung eines bzw. des mobilen redundanten Roboters ist nach einem Aspekt der vorliegenden Erfindung, insbesondere soft- und/oder hardwaretechnisch, zur Durchführung eines hier beschriebenen Verfahrens eingerichtet und/oder weist auf:
- Mittel zum Ermitteln einer, insbesondere variierenden, Position eines Hindernisses, insbesondere während einer Bewegung des Roboters, insbesondere seiner mobilen Basis; und
- Mittel zum Bewegen der mobilen Basis in Abhängigkeit von der ermittelten Position des Hindernisses und dabei Bewegen des Roboterarms in Abhängigkeit von wenigstens einer vorgegebenen Position, insbesondere einer vorgegebenen Bahn, einer roboterfesten ersten Referenz des Roboters und der Bewegung der mobilen Basis.

In einer Ausführung weist die vorgegebene Bahn wenigstens eine bzw. die vorgegebene Position, insbesondere mehrere bzw. die, insbesondere sukzessive anzufahrenden, vorgegebenen Positionen, auf, sie kann insbesondere vollständig oder teilweise durch diese verlaufen und/oder vorgegeben sein. Vorgegebene Positionen der Bahn können auch implizit, beispielsweise durch zu überschleifende Stützpositionen, Stützpositionen von Splines oder dergleichen, vorgegeben sein. Entsprechend kann "in Abhängigkeit von der vorgegebenen Bahn" insbesondere als "in Abhängigkeit von einer oder mehreren vorgegebenen Positionen der vorgegebenen Bahn" bzw. "in Abhängigkeit von der jeweils anzufahrenden vorgegebenen Position der vorgegebenen Bahn" verstanden werden.

In einer Ausführung wird die mobile Basis in Abhängigkeit von der ermittelten Position des Hindernisses, insbesondere durch das hierzu eingerichtete Mittel, derart bewegt, dass eine Kollision mit dem Hindernis (möglichst) vermieden, insbesondere ein Abstand zu dem Hindernis (möglichst) vergrößert und/oder ein Mindestabstand zu dem Hindernis (möglichst) eingehalten, wird, und/oder derart, dass der Roboter, insbesondere die mobile Basis, dem Hindernis (möglichst) ausweicht.

Erfindungsgemäß wird der Roboterarm in Abhängigkeit von der vorgegebenen Position, insbesondere Bahn, und der Bewegung der mobilen Basis, insbesondere durch das hierzu eingerichtete Mittel, derart bewegt, dass die erste Referenz die vorgegebene(n) Position(en) (möglichst) anfährt bzw. einnimmt, insbesondere eine Abweichung zwischen einer aktuellen und der (jeweils) vorgegebenen Position der ersten Referenz (möglichst) minimiert wird.

Somit wird erfindungsgemäß vorgeschlagen, mit der mobilen Basis einem Hindernis auszuweichen und dabei die Redundanz des Roboters zu nutzen, um dabei die vorgegebene(n) Position(en) anzufahren.

Die erste Referenz ist in einer Ausführung roboterarmfest, insbesondere roboterarmendgliedfest, sie kann insbesondere der Tool Center Point ("TCP") sein.

Die vorgegebene(n) Position(en) umfasst bzw. umfassen in einer Ausführung eine, insbesondere zwei- oder dreidimensionale, Lage der ersten Referenz, insbesondere relativ zur Umgebung, und/oder eine, insbesondere zwei- oder dreidimensionale, Orientierung der ersten Referenz, insbesondere relativ zur Umgebung.

Die vorgegebene(n) Position(en) bzw. Bahn kann bzw. können in einer Ausführung vor einer Bewegung des Roboters bzw. offline vorgegeben sein bzw. werden, insbesondere mittels einer Bahnplanung. Gleichermaßen kann bzw. können in einer Ausführung die vorgegebene(n) Position(en) bzw. Bahn während einer Bewegung des Roboters bzw. online vorgegeben sein bzw. werden, insbesondere mittels einer manuellen Steuerung, einer Handführung oder dergleichen.

In einer Ausführung ist das Hindernis ein bewegliches, insbesondere sich, insbesondere relativ zur Umgebung, bewegendes, Hindernis, so dass seine Position variiert.

Die, insbesondere variierende, Position des Hindernisses umfasst in einer Ausführung seine, insbesondere zwei- oder dreidimensionale, Lage, insbesondere relativ zur Umgebung oder der mobilen Basis. In einer Ausführung wird die Position durch elektromagnetische Strahlung, insbesondere eine Radar- und/oder Licht-, insbesondere Laserabtastung und/oder eine Bilderkennung bzw. -auswertung, akustisch, insbesondere mittels Ultraschall, durch Funkübertragung zwischen dem Hindernis und der Steuerung oder dergleichen ermittelt, insbesondere durch das hierzu, insbesondere soft- und/oder hardwaretechnisch, eingerichtete Mittel zum Ermitteln einer Position eines Hindernisses.

In einer Ausführung wird die Position während einer Bewegung des Roboters, insbesondere seiner Basis ermittelt, insbesondere durch das hierzu, insbesondere soft- und/oder hardwaretechnisch, eingerichtete Mittel zum Ermitteln einer Position eines Hindernisses. Mit anderen Worten kann das Verfahren in einer Ausführung online bzw. während des Betriebs des Roboters, insbesondere während des Anfahrens der vorgegebenen Position bzw. dem Abfahren der vorgegebenen Bahn und/oder einer Bewegung der mobilen Basis, durchgeführt werden.

Erfindungsgemäß wird einer von mehreren möglichen Werten eines ersten Redundanzfreiheitsgrads des Roboters in Abhängigkeit von der ermittelten Position des Hindernisses ermittelt und der Roboter, insbesondere die mobile Basis, insbesondere eine roboterbasisfeste zweite Referenz, insbesondere deren, insbesondere zwei- oder dreidimensionale, Lage, insbesondere relativ zur Umgebung, in Abhängigkeit von diesem ermittelten Wert des ersten Redundanzfreiheitsgrads bewegt bzw. vorgegeben. Entsprechend weist in einer Ausführung die Steuerung Mittel zum Ermitteln eines von mehreren möglichen Werten eines ersten Redundanzfreiheitsgrads des Roboters in Abhängigkeit von der ermittelten Position des Hindernisses und Mittel zum Bewegen bzw. Vorgeben des Roboters, insbesondere der mobilen Basis, insbesondere einer roboterbasisfesten zweiten Referenz, insbesondere deren, insbesondere zwei- oder dreidimensionale, Lage, insbesondere relativ zur Umgebung, in Abhängigkeit von diesem ermittelten Wert des ersten Redundanzfreiheitsgrads auf.

In einer Ausführung kann so vorteilhaft eine eindimensionale Ermittlung, insbesondere Optimierung, des ersten Redundanzfreiheitsgrads in Abhängigkeit von der ermittelten Position des Hindernisses durchgeführt werden. Dies ist insbesondere in Hinblick auf die Online- bzw. Echtzeitfähigkeit vorteilhaft.

Mit anderen Worten wird in einer Ausführung zunächst eine Lage der roboterbasisfesten zweiten Referenz in Abhängigkeit von der Position des Hindernisses derart vorgegeben, dass der erste Redundanzfreiheitsgrad eine vorbestimmte Bedingung erfüllt.

In einer Ausführung wird der Wert des ersten Redundanzfreiheitsgrads, insbesondere durch ein hierzu, insbesondere soft- und/oder hardwaretechnisch, eingerichtetes Mittel der Steuerung, derart ermittelt, dass er in einem mittleren Bereich eines zulässigen Wertebereichs des ersten Redundanzfreiheitsgrads liegt.

Der mittlere Bereich ist in einer Ausführung, insbesondere wenigstens im Wesentlichen äquidistant, von Grenzen des zulässigen Wertebereichs beabstandet und/oder erstreckt sich über höchstens 25%, insbesondere höchstens 10%, des zulässigen Wertebereichs.

Der zulässige Wertebereich kann in einer Ausführung durch Achsgrenzen des Roboterarms, die vorgegebene(n) Position(en) der ersten Referenz und/oder das Hindernis begrenzt sein bzw. werden.

Hierdurch wird in einer Ausführung vorteilhaft eine Flexibilität des Roboters, insbesondere zur Reaktion auf (weitere) Hindernisse bzw. Bewegungen des Hindernisses und/oder zum Anfahren weiterer vorgegebener Positionen, erhöht und/oder seine Belastung optimiert.

In einer Ausführung variiert der (Wert des) erste(n) Redundanzfreiheitsgrad(es) mit, insbesondere proportional zu, einem Abstand einer bzw. der roboterbasisfesten zweiten Referenz zu der (jeweils) vorgegebenen Position der ersten Referenz, erfindungsgemäß ist der (Wert des) erste(n) Redundanzfreiheitsgrad(es) dieser Abstand.

Somit wird in einer Ausführung vorgeschlagen, den Abstand der roboterbasisfesten zweiten Referenz und damit der mobilen Basis zu der (jeweils) vorgebebenen Position zu variieren, um einem Hindernis auszuweichen.

Der Abstand ist in einer Ausführung ein zwei- oder dreidimensionaler Abstand, insbesondere ein horizontaler Abstand und/oder ein Abstand parallel zur Aufstandsfläche der mobilen Basis.

Die roboterbasisfeste zweite Referenz ist in einer Ausführung die (erste) zur Aufstandsfläche der mobilen Basis senkrechte Drehachse des Roboterarms bzw. fluchtet mit dieser. Hierdurch kann vorteilhaft eine Redundanz zwischen einer solchen Drehachse und einer Rotation der mobilen Basis auf der Aufstandsfläche genutzt werden.

Erfindungsgemäß wird einer von mehreren möglichen Werten eines zweiten Redundanzfreiheitsgrads des Roboters in Abhängigkeit von einer Änderung des ersten Redundanzfreiheitsgrads ermittelt und der Roboter, insbesondere die mobile Basis, insbesondere deren Orientierung, in Abhängigkeit von diesem ermittelten Wert des zweiten Redundanzfreiheitsgrads bewegt bzw. vorgegeben. Entsprechend weist in einer Ausführung die Steuerung Mittel zum Ermitteln eines von mehreren möglichen Werten eines zweiten Redundanzfreiheitsgrads des Roboters in Abhängigkeit von einer Änderung des ersten Redundanzfreiheitsgrads und Mittel zum Bewegen bzw. Vorgeben des Roboters, insbesondere der mobilen Basis, insbesondere deren Orientierung, in Abhängigkeit von diesem ermittelten Wert des zweiten Redundanzfreiheitsgrads auf.

Somit wird in einer Ausführung eine zweistufige Auflösung der Redundanz vorgeschlagen: zunächst wird ein Wert des ersten Redundanzfreiheitsgrads ermittelt, um dem Hindernis auszuweichen, und basierend auf der Änderung dieses Wertes, insbesondere während des Ausweichens, dann insbesondere die Orientierung der mobilen Basis relativ zur Umgebung und/oder dem Roboterarm vorgegeben.

Hierdurch kann vorteilhaft die erforderliche Rechenleistung reduziert und/oder verteilt werden. Zusätzlich oder alternativ kann die Ermittlung des Wertes des zweiten Redundanzfreiheitsgrads auch unabhängig von der Art der Ermittlung des Wertes des ersten Redundanzfreiheitsgrads erfolgen und entsprechend auch bei einer Modifikation der Ermittlung des Wertes des ersten Redundanzfreiheitsgrads weiter verwendet werden und umgekehrt.

In einer Ausführung wird der Wert des zweiten Redundanzfreiheitsgrads, insbesondere durch ein hierzu, insbesondere soft- und/oder hardwaretechnisch, eingerichtetes Mittel der Steuerung, derart ermittelt, dass eine Referenzrichtung der mobilen Basis mit einer Bewegung der roboterbasisfesten zweiten Referenz einen Winkel einschließt, der kleiner als 30°, insbesondere kleiner als 15°, ist und vorzugsweise höchstens 5° beträgt.

Die roboterbasisfeste Referenzrichtung ist in einer Ausführung eine Längsachsenrichtung bzw. Vorwärtsfahrtrichtung der mobilen Basis und/oder die Richtung einer Verbindungslinie zwischen einer Drehachse oder einem Mittelpunkt der mobilen Basis und der (ersten) zur Aufstandsfläche der mobilen Basis senkrechten Drehachse des Roboterarms oder parallel zu einer dieser Richtungen.

Mit anderen Worten wird in einer Ausführung die mobile Basis derart bewegt bzw. ihre Orientierung derart vorgegeben, dass die mobile Basis, insbesondere ihre Drehachse oder ihr Mittelpunkt, einer Bewegung, insbesondere Bahn, der zweiten Referenz und/oder (ersten) zur Aufstandsfläche der mobilen Basis senkrechten Drehachse des Roboterarms, wenigstens im Wesentlichen, folgt.

In einer Ausführung variiert der (Wert des) zweite(n) Redundanzfreiheitsgrad(es) mit, insbesondere proportional, zu einer Orientierung der mobilen Basis, insbesondere relativ zu dem Roboterarm oder der Umgebung, erfindungsgemäß hängt der (Wert des) zweite(n) Redundanzfreiheitsgrad(es) von dieser Orientierung ab und ist ein entsprechender (Orientierungs)Winkel.

Allgemein wird in einer Ausführung der vorliegenden Erfindung, insbesondere in der vorstehend beschriebenen vorteilhaften Weise, die mobile Basis derart translatorisch bewegt, dass ein Abstand zwischen einer bzw. der roboterbasisfesten zweiten Referenz und der (jeweils) vorgegebenen Position in einem mittleren Bereich eines zulässigen Wertebereichs dieses Abstandes liegt. Entsprechend weist die Steuerung in einer Ausführung Mittel zum translatorischen Bewegen der mobilen Basis derart, dass ein Abstand zwischen einer bzw. der roboterbasisfesten zweiten Referenz und der (jeweils) vorgegebenen Position in einem mittleren Bereich eines zulässigen Wertebereichs dieses Abstandes liegt, auf.

Zusätzlich oder alternativ wird in einer Ausführung der vorliegenden Erfindung allgemein, insbesondere in der vorstehend beschriebenen vorteilhaften Weise, die mobile Basis derart rotatorisch bewegt, dass eine bzw. die Referenzrichtung der mobilen Basis mit einer translatorischen Bewegung einer bzw. der roboterbasisfesten zweiten Referenz einen Winkel einschließt, der, insbesondere stets, kleiner als 30°, insbesondere als 15°, ist und vorzugsweise höchstens 5° beträgt. Entsprechend weist die Steuerung in einer Ausführung Mittel zum rotatorischen Bewegen der mobilen Basis derart, dass eine bzw. die Referenzrichtung der mobilen Basis mit einer translatorischen Bewegung einer bzw. der roboterbasisfesten zweiten Referenz einen Winkel einschließt, der, insbesondere stets, kleiner als 30°, insbesondere als 15°, ist und vorzugsweise höchstens 5° beträgt, auf.

Mit anderen Worten wird die Roboterbasis in einer Ausführung entsprechend der Position des Hindernisses in der Mitte des hierdurch eingeschränkten zulässigen Wertebereichs des Abstandes translatorisch bewegt und auf diese Weise eine Redundanz aufgelöst, was vorteilhaft durch eine eindimensionale Suche und somit insbesondere online erfolgen kann.

Die Roboterbasis wird in einer Ausführung derart gedreht, dass ihre Drehachse und/oder ihr Mittelpunkt einer durch diese translatorische Bewegung definierten Bahn der roboterbasisfesten zweiten Referenz, insbesondere der ersten zur Aufstandsfläche der Basis senkrechten Drehachse des Roboterarms, wenigstens im Wesentlichen folgt.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter steuern bzw. betreiben kann.

Ein oder mehrere Schritte des Verfahrens werden in einer Ausführung wenigstens teilweise automatisiert durchgeführt.

Weitere Vorteile und Merkmale ergeben sich aus den Unteransprüchen und den Ausführungsbeispielen. Hierzu zeigt, teilweise schematisiert:
- Fig. 1A:: einen mobilen redundanten Roboter nach einer Ausführung der vorliegenden Erfindung in einer Seitansicht für einen ersten Wert eines ersten Redundanzfreiheitsgrads;
- Fig. 1B:: den mobilen redundanten Roboter in Fig. 1A entsprechender Ansicht für einen zweiten Wert des ersten Redundanzfreiheitsgrads;
- Fig. 2A:: den mobilen redundanten Roboter in einer Draufsicht für einen ersten Wert eines zweiten Redundanzfreiheitsgrads;
- Fig. 2B:: den mobilen redundanten Roboter in Fig. 2A entsprechender Ansicht für einen zweiten Wert des zweiten Redundanzfreiheitsgrads;
- Fig. 3:: ein Abfahren einer vorgegebenen Bahn mit einer ersten Referenz des mobilen Roboters nach einer Ausführung der vorliegenden Erfindung; und
- Fig. 4:: ein Verfahren nach einer Ausführung der vorliegenden Erfindung.

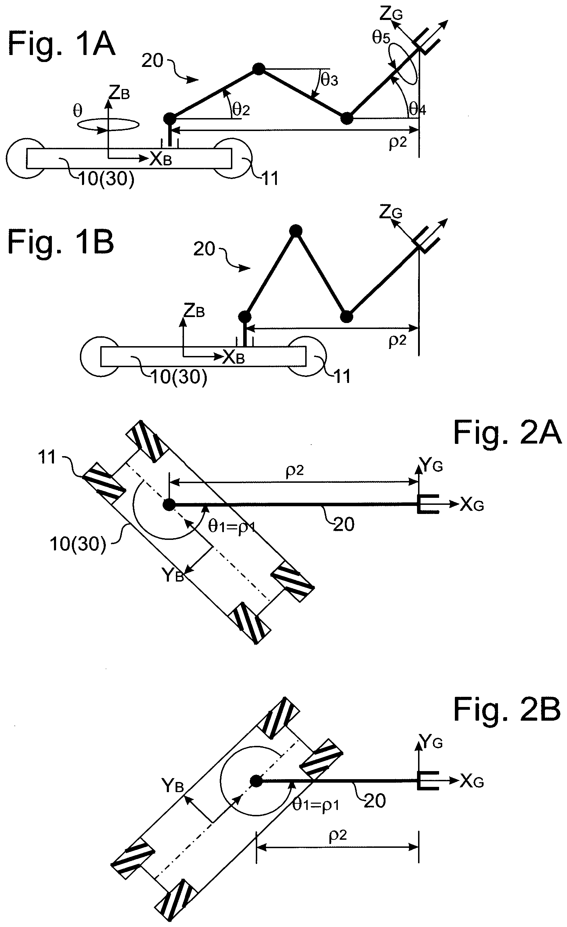

Fig. 1A zeigt in einer Seitansicht einen mobilen redundanten Roboter nach einer Ausführung der vorliegenden Erfindung mit einer mobilen Basis bzw. Plattform 10, einem mehrachsigen Roboterarm 20 und einer in der Basis angeordneten Steuerung 30.

Die Basis 10 weist vier Mecanum-Räder 11 und ein im Mittelpunkt der Basis angeordnetes basisfestes Koordinatensystem auf, dessen Z-Achse Z_{B} senkrecht auf einer Aufstandsfläche der Basis steht und mit einer Drehachse der Basis fluchtet, dessen X-Achse X_{B} durch eine erste Drehachse des Roboterarms senkrecht zur Aufstandsfläche der Basis verläuft, und dessen Y-Achse Y_{B} mit der X- und Z-Achse ein Rechtssystem bildet. Die Lage der mobilen Basis wird daher durch die Koordinaten X_{B}, Y_{B} beschrieben, ihre Orientierung durch den Drehwinkel θ um die Z-Achse.

Ein Karussell des Roboterarm 20 ist um diese erste Drehachse relativ zur Basis 10 drehbar, wie in Fig. 2A durch θ₁ angedeutet. An dem Karussell ist eine Schwinge um eine zu der Aufstandsfläche parallele Drehachse drehbar, wie in Fig. 1A durch θ₂ angedeutet. An der Schwinge ist ein Arm um eine zu der Aufstandsfläche parallele Drehachse drehbar, wie in Fig. 1A durch θ₃ angedeutet. An dem Arm ist eine Hand um eine zu der Aufstandsfläche parallele Drehachse drehbar, wie in Fig. 1A durch θ₄ angedeutet. An der Hand ist ein Endeffektor um eine zu dieser Drehachse senkrechte Drehachse drehbar, wie in Fig. 1A durch θ₅ angedeutet. Der Tool Center Point des Endeffektors bzw. der Hand bildet eine roboterarmendgliedfeste erste Referenz.

Der Vergleich der Fig. 1A mit Fig. 1B und gleichermaßen der Vergleich der Fig. 2A mit Fig. 2B verdeutlicht einen ersten Redundanzfreiheitsgrad ρ₂ des Roboters, der einen Abstand einer roboterbasisfesten zweiten Referenz in Form der ersten Drehachse θ₁ zu der ersten Referenz angibt: man erkennt, dass der Roboter dieselbe vorgegebene Position (X_{G}, Y_{G}, Z_{G}) seines TCPs mit verschiedenen Werten des ersten Redundanzfreiheitsgrad ρ₂ anfahren bzw. einnehmen kann. Entsprechend variiert der erste Redundanzfreiheitsgrad mit dem Abstand der roboterbasisfesten zweiten Referenz zu der vorgegebenen Position.

Der Vergleich der Fig. 2A mit Fig. 2B verdeutlicht einen zweiten Redundanzfreiheitsgrad ρ₁ des Roboters, der eine Orientierung der mobilen Basis relativ zum Karussell des Roboterarms angibt: man erkennt, dass der Roboter dieselbe vorgegebene Position (X_{G}, Y_{G}, Z_{G}) seines TCPs mit verschiedenen Werten des zweiten Redundanzfreiheitsgrad ρ₁ anfahren bzw. einnehmen kann. Entsprechend variiert der zweite Redundanzfreiheitsgrad mit einer Orientierung der mobilen Basis relativ zu dem Roboterarm.

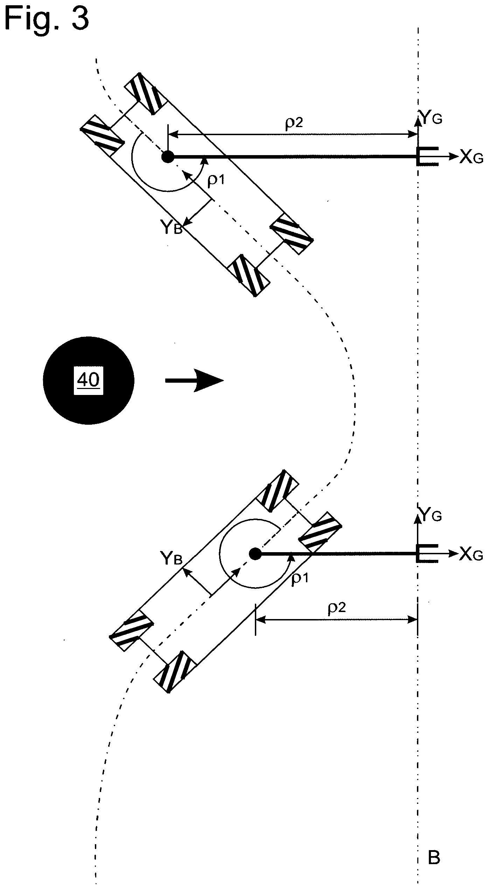

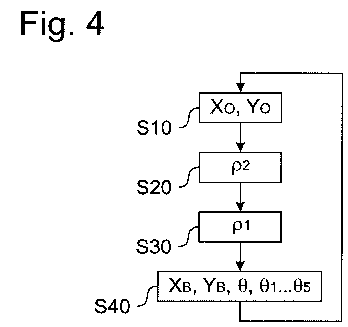

Die Steuerung 30 führt online bzw. während einer Bewegung des Roboters, insbesondere seiner mobilen Basis, ein nachfolgend mit Bezug auf Fig. 3, 4 erläutertes Verfahren zum Abfahren einer in Fig. 3 strich-doppelpunktiert angedeuteten, vorgegebenen Bahn B durch sukzessives Anfahren mehrerer in Fig. 3 durch (X_{G}, Y_{G}) bezeichneten, vorgegebenen Positionen (mit) der roboterfesten ersten Referenz des mobilen redundanten Roboters durch. Die vorgegebene Bahn ist rein exemplarisch und zur einfacheren Darstellung im Ausführungsbeispiel der Fig. 3 geradlinig. Sie kann in einer nicht dargestellten Abwandlung beliebig gekrümmt sein. Die Bahn umfasst neben der durch X_{G}, Y_{G} und Z_{G} vorgegebenen Lage auch die insbesondere durch den Winkel der Hand mit der Horizontalen (vgl. Fig. 1A: θ₄) und die Verdrehung um die Handlängsachse (vgl. Fig. 1A: θ₅) vorgebbare Orientierung der ersten Referenz.

In einem ersten Schritt S10 (vgl. Fig. 4) wird eine variierende Position (X_{G}, Yo) eines sich relativ zur Umgebung und/oder der Basis 10 bewegenden Hindernisses 40 (vgl. Fig. 3) ermittelt.

Die Steuerung 30 ermittelt in einem zweiten Schritt S20 in Abhängigkeit von dieser ermittelten Position des Hindernisses einen von mehreren möglichen Werten des ersten Redundanzfreiheitsgrads ρ₂ des Roboters derart, dass er in einem mittleren Bereich eines zulässigen Wertebereichs des ersten Redundanzfreiheitsgrads liegt.

Dies kann vorteilhaft durch ein künstliches potentielles Feld erfolgen, das den mittleren Bereich stärker und der Position des Hindernisses entsprechende Werte negativ gewichtet.

Man erkennt insbesondere durch die Zusammenschau der Fig. 1A mit Fig. 1B sowie der Fig. 2A mit Fig. 2B, dass für eine vorgegebene Position (X_{G}, Y_{G}, Z_{G}) der Bahn B, insbesondere in Abhängigkeit von der Höhe Z_{G} der jeweils vorgegebenen Position, konstruktiv mehrere Werte des ersten Redundanzfreiheitsgrads ρ₂ möglich sind.

Zudem verdeutlicht die Zusammenschau der Fig. 2A, 2B und 3, dass das Hindernis den zulässigen Wertebereich des ersten Redundanzfreiheitsgrads ρ₂ einschränkt: um eine Kollision zu vermeiden, insbesondere einen Abstand zum Hindernis zu vergrößern und/oder einen Mindestabstand einzuhalten, ist der erste Redundanzfreiheitsgrad ρ₂ im Ausführungsbeispiel nach oben begrenzt. Mit anderen Worten ist bzw. wird der zulässige Verfahrbereich der Basis 10 durch das Hindernis 40 nach links in Fig. 3 begrenzt.

Die Steuerung 30 kann daher in Schritt S20 zunächst aus verschiedenen, unter Berücksichtigung des Hindernisses 40 möglichen bzw. zulässigen, Lagen der ersten Drehachse des Roboterarms diejenige Lage ermitteln, die in der Mitte der möglichen Abstände zur vorgegebenen Position (X_{G}, Y_{G}, Z_{G}) liegt. Entsprechend muss die Steuerung 30 in Schritt S20 vorteilhaft nur eine eindimensionale Suche durchführen.

Dabei verbleibt jedoch noch der zweite Redundanzfreiheitsgrad ρ₁ des Roboters unbestimmt: wie insbesondere die Zusammenschau der Fig. 2A mit Fig. 2B zeigt, sind für dieselbe Lage der mobilen Basis 10, insbesondere ihrer zweiten Referenz bzw. der ersten Drehachse θ₁ des Roboterarms, zum Anfahren der vorgegebenen Position (X_{G}, Y_{G}, Z_{G}) des TCPs verschiedene Orientierungen der mobilen Basis relativ zum Roboterarm bzw. der Umgebung möglich.

Zur Auflösung dieses zweiten Redundanzfreiheitsgrads ρ₁ wird in einem Schritt S30 (vgl. Fig. 4) der Wert des zweiten Redundanzfreiheitsgrads in Abhängigkeit von einer Änderung des ersten Redundanzfreiheitsgrads ρ₂ derart ermittelt, dass eine in Fig. 1-3 strichpunktiert angedeutete Referenzrichtung der mobilen Basis 10 mit einer Bewegung der roboterbasisfesten zweiten Referenz einen Winkel einschließt, der kleiner als 15° ist.

Mit anderen Worten lenkt die Basis 10 derart, dass sie der in Fig. 3 doppelstrichpunktiert angedeuteten Bahn der ersten Drehachse, die durch den ersten Redundanzfreiheitsgrad ρ₂ bestimmt wird, soweit bzw. so gut wie möglich folgt. Dies kann beispielsweise dadurch umgesetzt werden, dass zur Bestimmung der Lage des Mittelpunkts bzw. der Drehachse Z_{B} der mobilen Basis 10 auf die in vorangegangenen Schritten ermittelten, durch ρ₂ bestimmten, Lagen der roboterbasisfesten zweiten Referenz zurückgegriffen wird.

In Schritt S40 ermittelt die Steuerung 30 auf Basis der in Schritt S20 und S30 ermittelten Werte des ersten und zweiten Redundanzfreiheitsgrads und der (jeweils) vorgegebenen Position bzw. Bahn des TCPs die zugehörigen bzw. entsprechenden Gelenkwinkel des Roboterarms 20 sowie die zugehörige bzw. entsprechende Position und Orientierung der mobilen Basis 10 und bewegt diese entsprechend.

Mit anderen Worten werden in den Schritten S20, S30 in einem zweistufigen Verfahren Werte für den ersten und zweiten Redundanzfreiheitsgrad ermittelt und in Schritt S40 auf Basis dieser Werte und der vorgegebenen Position des TCPs in an sich bekannter Weise die Steuergrößen des Roboters ermittelt und dieser entsprechend bewegt.

Auf diese Weise bewegt die Steuerung die mobile Basis 10 in Abhängigkeit von der ermittelten Position des Hindernisses und dabei den Roboterarm in Abhängigkeit von der vorgegebenen Position und der Bewegung der mobilen Basis.

Man erkennt, dass die mobile Basis 10 dabei derart translatorisch bewegt bzw. in der Zeichenebene der Fig. 3 verschoben bzw. -fahren wird, dass der Abstand zwischen der roboterbasisfesten zweiten Referenz und der jeweils vorgegebenen Position in einem mittleren Bereich des zulässigen Wertebereichs dieses Abstandes liegt, und dass sie derart rotatorisch bewegt bzw. in der Zeichenebene der Fig. 3 gedreht wird, dass die Referenzrichtung mit der translatorischen Bewegung der zu einer Aufstandsfläche der mobilen Basis senkrechten ersten Drehachse des Roboterarms 20 einen Winkel einschließt, der kleiner als 30° ist.

Obwohl in der vorhergehenden Beschreibung exemplarische Ausführungen erläutert wurden, sei darauf hingewiesen, dass eine Vielzahl von Abwandlungen möglich ist.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: Basis
- 11: Mecanum-Rad (Fahrwerk)
- 20: Roboterarm
- 30: Steuerung
- 40: Hindernis
- B: Bahn
- X_{B}, Y_{B}, Z_{B}: roboterbasisfestes Koordinatensystem
- X_{G}, Y_{G}, Z_{G}: vorgegebene Position der ersten Referenz
- θ: Orientierung der Basis
- θ₁,..., θ₅: Gelenkachse/-winkel
- ρ₁: zweiter Redundanzfreiheitsgrad
- ρ₂: erster Redundanzfreiheitsgrad

## Patentansprüche

1. Verfahren zum Anfahren wenigstens einer vorgegebenen Position (X_{G}, Y_{G}, Z_{G}) mit einer roboterfesten ersten Referenz (TCP) eines mobilen redundanten Roboters, der eine mobile Basis (10) und einen mehrachsigen Roboterarm (20) aufweist, wobei die mobile Basis (10) eine roboterbasisfeste zweite Referenz und wenigstens zwei translatorischen Freiheitsgrade und wenigstens einen aktuierbaren rotatorischen Freiheitsgrad aufweist,
mit den Schritten:
Ermitteln (S10) einer Position eines Hindernisses (40) während einer Bewegung des Roboters;
Ermitteln (S20) eines von mehreren möglichen Werten eines ersten Redundanzfreiheitsgrads (ρ₂) des Roboters in Abhängigkeit von der ermittelten Position des Hindernisses (40),
wobei der Wert des ersten Redundanzfreiheitsgrads (ρ₂) des Roboters der Abstand der roboterbasisfesten zweiten Referenz zu der vorgegebenen Position (X_{G}, Y_{G}, Z_{G}) der ersten Referenz ist,
wobei der Wert des ersten Redundanzfreiheitsgrads (ρ₂) derart ermittelt wird, dass er in einem mittleren Bereich eines zulässigen Wertebereichs des ersten Redundanzfreiheitsgrads (ρ₂) liegt,
und wobei der mittlere Bereich äquidistant von den Grenzen des zulässigen Wertebereichs beabstandet ist;
Ermitteln (S30) eines von mehreren möglichen Werten eines zweiten Redundanzfreiheitsgrads (ρ₁) des Roboters in Abhängigkeit von einer Änderung des ersten Redundanzfreiheitsgrads (ρ₂),
wobei der Wert des zweiten Redundanzfreiheitsgrads (ρ₁) des Roboters ein Orientierungswinkel der Orientierung der mobilen Basis ist;
Bewegen (S40) der mobilen Basis (10) in Abhängigkeit von diesen ermittelten Werten des ersten und zweiten Redundanzfreiheitsgrads (ρ₂, ρ₁), so dass die mobile Basis dem Hindernis (40) ausweicht; und dabei
Bewegen (S40) der ersten Referenz (TCP) des Roboterarms (20) in Abhängigkeit von der Bewegung der mobilen Basis, so dass die vorgegebene Position (X_{G}, Y_{G}, Z_{G}) angefahren wird.

2. Verfahren nach Anspruch 1, **dadurch gekennzeichnet, dass** der erste Redundanzfreiheitsgrad (ρ₂) mit einem Abstand einer roboterbasisfesten zweiten Referenz (θ₁) zu der vorgegebenen Position (X_{G}, Y_{G}, Z_{G}) variiert.

3. Verfahren nach Anspruch 1 oder 2, **dadurch gekennzeichnet, dass** der Wert des zweiten Redundanzfreiheitsgrads derart ermittelt wird, dass eine Referenzrichtung (X_{B}) der mobilen Basis (10) mit einer Bewegung der roboterbasisfesten zweiten Referenz (θ₁) einen Winkel einschließt, der kleiner als 30° ist.

4. Verfahren nach einem der vorhergehenden Ansprüche, **dadurch gekennzeichnet, dass** der zweite Redundanzfreiheitsgrad (ρ₁) mit einer Orientierung (θ₁) der mobilen Basis (10), insbesondere relativ zu dem Roboterarm (20), variiert.

5. Verfahren nach einem der vorhergehenden Ansprüche, **dadurch gekennzeichnet, dass** die mobile Basis (10) derart translatorisch (X_{B}, Y_{B}) bewegt wird, dass ein Abstand (ρ₂) zwischen einer roboterbasisfesten zweiten Referenz (θ₁) und der vorgegebenen Position (X_{G}, Y_{G}, Z_{G}) in einem mittleren Bereich eines zulässigen Wertebereichs dieses Abstandes liegt.

6. Verfahren nach einem der vorhergehenden Ansprüche, **dadurch gekennzeichnet, dass** die mobile Basis (10) derart rotatorisch (θ) bewegt wird, dass eine Referenzrichtung (X_{B}) der mobilen Basis mit einer translatorischen (X_{B}, Y_{B}) Bewegung einer roboterbasisfesten zweiten Referenz (θ₁) einen Winkel einschließt, der kleiner als 30° ist.

7. Mobiler redundanter Roboter umfassend: eine mobile Basis (10), die wenigstens zwei translatorische Freiheitsgrade und wenigstens einen aktuierbaren rotatorischen Freiheitsgrad aufweist,
einen mehrachsigen Roboterarm (20); und
eine Steuerung (30), die zur Durchführung eines Verfahrens nach einem der vorhergehenden Ansprüche eingerichtet ist.

8. Roboter nach Anspruch 7, **dadurch gekennzeichnet, dass** die mobile Basis (10) ein omnidirektionales Fahrwerk, insbesondere wenigstens ein omnidirektionales Rad (11) und/oder eine Raupenkette, aufweist.

9. Roboter nach Anspruch 7 oder 8, **dadurch gekennzeichnet**, der Roboterarm (20) wenigstens eine Drehachse (θ₁) senkrecht zu einer Aufstandsfläche der mobilen Basis und/oder wenigstens eine zu der Aufstandsfläche der mobilen Basis parallele Drehachse (θ₂,..., θ₄) aufweist.

10. Computerprogrammprodukt, umfassend Befehle, die bei der Ausführung des Programms durch einen Computer diesen veranlassen, das Verfahren nach einem der vorhergehenden Ansprüche 1 bis 6 auszuführen.

## Claims

1. A method of approaching at least one predetermined position (X_{G} , Y_{G} , Z_{G} ) with a robot-fixed first reference (TCP) of a mobile redundant robot, wherein the mobile redundant robot comprises a mobile base (10) and a multi-axis robot arm (20),
wherein the mobile base (10) has a second reference fixed with respect to the base of the robot as well as at least two translational degrees of freedom and at least one rotational degree of freedom that can be actuated,
wherein the method comprises the following steps:
determining (S10) a position of an obstacle (40) during a movement of the robot;
determining (S20) one of a plurality of possible values of a first redundant degree of freedom (ρ₂) of the robot as a function of the position of the obstacle (40) that has been determined,
wherein the value of the first redundant degree of freedom (ρ₂) of the robot is the distance of the second reference, which is fixed with respect to the base of the robot, to the predetermined position (X_{G} , Y_{G} , Z_{G} ) of the first reference,
wherein the value of the first redundant degree of freedom (ρ₂) is determined in such a way that it lies in a middle range of a permissible range of values of the first redundant degree of freedom (ρ₂),
and wherein the middle range is equidistantly spaced from the limits of the permissible range of values;
determining (S30) one of a plurality of possible values of a second redundant degree of freedom (ρ₁) of the robot as a function of a change in the first redundant degree of freedom (ρ₂ ),
wherein the value of the second redundant degree of freedom (ρ₁) of the robot is an orientation angle of the orientation of the mobile base;
moving (S40) the mobile base (10) as a function of these values of the first and second redundant degrees of freedom (ρ₂, ρ₁ ) that have been determined, so that the mobile base avoids the obstacle (40); and, during the course of this,
moving (S40) the first reference (TCP) of the robot arm (20) as a function of the movement of the mobile base, so that the predetermined position (X_{G} , Y_{G} , Z_{G} ) is approached.

2. The method as claimed in claim 1, **characterised in that** the first redundant degree of freedom (ρ₂) varies with a distance of a second reference (θ₁ ), which is fixed with respect to the base of the robot, from the predetermined position (X_{G} , Y_{G} , Z_{G} ).

3. The method as claimed in claim 1 or 2, **characterised in that** the value of the second redundant degree of freedom is determined in such a way that a reference direction (X_{B} ) of the mobile base (10) includes an angle with a movement of the second reference (θ₁ ), which second reference (θ₁ ) is fixed with respect to the base of the robot, the angle being smaller than 30°.

4. The method as claimed in any one of the preceding claims, **characterised in that** the second redundant degree of freedom (ρ₁) varies with an orientation (θ₁ ) of the mobile base (10), in particular relative to the robot arm (20).

5. The method as claimed in any one of the preceding claims, **characterised in that** the mobile base (10) is moved translationally (X_{B} , Y_{B} ) in such a way that a distance (ρ₂ ) between a second reference (θ₁ ), which is fixed with respect to the base of the robot, and the predetermined position (X_{G} , Y_{G} , Z_{G} ) is in a middle range of a permissible range of values of said distance.

6. The method as claimed in any one of the preceding claims, **characterised in that** the mobile base (10) is moved rotationally (θ ) in such a way that a reference direction (X_{B} ) of the mobile base includes an angle with a translational movement (X_{B} , Y_{B} ) of a second reference (θ₁ ), which second reference (θ₁ ) is fixed with respect to the base of the robot, the angle being smaller than 30°.

7. A mobile redundant robot comprising: a mobile base (10) which has at least two translational degrees of freedom and at least one rotational degree of freedom that can be actuated,
a multi-axis robot arm (20); and
a control system (30) which is arranged to carry out a method as claimed in any one of the preceding claims.

8. The robot as claimed in claim 7, **characterised in that** the mobile base (10) comprises an omnidirectional chassis, in particular at least one omnidirectional wheel (11) and / or a caterpillar track.

9. The robot as claimed in claim 7 or 8, **characterised in that** the robot arm (20) has at least one axis of rotation (θ₁ ) which is perpendicular to a support surface of the mobile base, and / or at least one axis of rotation (θ₂ , ..., θ₄ ) which is parallel to the support surface of the mobile base.

10. A computer program product comprising instructions which, when the program is being executed by a computer, cause the computer to carry out the method as claimed in any one of the preceding claims 1 to 6.

## Revendications

1. Procédé de démarrage d'au moins une position prédéfinie (X_{G}, Y_{G}, Z_{G}) avec une première référence solidaire du robot (TCP) d'un robot redondant mobile, qui présente une base mobile (10) et un bras robotisé (20) multiaxial, dans lequel la base mobile (10) présente une deuxième référence solidaire du robot et au moins deux degrés de liberté de translation et au moins un degré de liberté de rotation pouvant être actionné,
avec les étapes :
de détermination (S10) d'une position d'un obstacle (40) au cours d'un déplacement du robot ;
de détermination (S20) d'une parmi plusieurs valeurs possibles d'un premier degré de liberté de redondance (ρ₂) du robot en fonction de la position déterminée de l'obstacle (40),
dans lequel la valeur du premier degré de liberté de redondance (ρ₂) du robot est la distance de la deuxième référence solidaire de la base de robot par rapport à la position prédéfinie (X_{G}, Y_{G}, Z_{G}) de la première référence,
dans lequel la valeur du premier degré de liberté de redondance (ρ₂) est déterminée de telle manière qu'elle se situe dans une plage moyenne d'une plage de valeurs admise du premier degré de liberté de redondance (ρ₂),
et dans lequel la plage moyenne est espacée de manière équidistante des limites de la plage de valeurs admise ;
de détermination (S30) d'une parmi plusieurs valeurs possibles d'un deuxième degré de liberté de redondance (ρ₁) du robot en fonction d'une modification du premier degré de liberté de redondance (ρ₂),
dans lequel la valeur du deuxième degré de liberté de redondance (ρ1) du robot est un angle d'orientation de l'orientation de la base mobile ;
de déplacement (S40) de la base mobile (10) en fonction desdites valeurs déterminées du premier et du deuxième degré de liberté de redondance (ρ₂, ρ₁) de sorte que la base mobile esquive l'obstacle (40) ; et ce faisant
de déplacement (S40) de la première référence (TCP) du bras robotisé (20) en fonction du déplacement de la base mobile de sorte que la position prédéfinie (X_{G}, Y_{G}, Z_{G}) est démarrée.

2. Procédé selon la revendication 1, **caractérisé en ce que** le premier degré de liberté de redondance (ρ₂) varie avec une distance d'une deuxième référence solidaire de la base de robot (θ₁) par rapport à la position prédéfinie (X_{G}, Y_{G}, Z_{G}).

3. Procédé selon la revendication 1 ou 2, **caractérisé en ce que** la valeur du deuxième degré de liberté de redondance est déterminée de telle manière qu'une direction de référence (X_{B}) de la base mobile (10) forme avec un déplacement de la deuxième référence solidaire de la base du robot (θ₁) un angle, qui est inférieur à 30°.

4. Procédé selon l'une quelconque des revendications précédentes, **caractérisé en ce que** le deuxième degré de liberté de redondance (ρ₁) varie avec une orientation (θ₁) de la base mobile (10), en particulier par rapport au bras robotisé (20).

5. Procédé selon l'une quelconque des revendications précédentes, **caractérisé en ce que** la base mobile (10) est déplacée par translation (X_{B}, Y_{B}) de telle manière qu'une distance (ρ₂) entre une deuxième référence solidaire de la base de robot (θ₁) et la position prédéfinie (X_{G}, Y_{G}, Z_{G}) se situe dans une plage moyenne d'une plage de valeurs admise de ladite distance.

6. Procédé selon l'une quelconque des revendications précédentes, **caractérisé en ce que** la base mobile (10) est déplacée par rotation (θ) de telle manière qu'une direction de référence (X_{B}) de la base mobile forme avec un déplacement par translation (X_{B}, Y_{B}) d'une deuxième référence solidaire de la base de robot (θ₁) un angle, qui est inférieur à 30°.

7. Robot redondant mobile comprenant : une base mobile (10), qui présente au moins deux degrés de liberté de translation et au moins un degré de liberté de rotation pouvant être actionné,
un bras robotisé (20) multiaxial ; et
une commande (30), qui est mise au point pour mettre en œuvre un procédé selon l'une quelconque des revendications précédentes.

8. Robot selon la revendication 7, **caractérisé en ce que** la base mobile (10) présente un châssis omnidirectionnel, en particulier au moins une roue (11) omnidirectionnelle et/ou une chenille.

9. Robot selon la revendication 7 ou 8, **caractérisé en ce que** le bras robotisé (20) présente au moins un axe de rotation (θ₁) de manière perpendiculaire par rapport à une surface d'appui de la base mobile et/ou au moins un axe de rotation (θ₂, ..., θ₄) parallèle à la surface d'appui de la base mobile.

10. Produit-programme d'ordinateur comprenant des instructions, qui, lors de l'exécution du programme par un ordinateur, amènent celui-ci à exécuter le procédé selon l'une quelconque des revendications 1 à 6.
